# EUROPÄISCHE PATENTSCHRIFT

(11) **EP 1 178 271 B1**
(45) Veröffentlichungstag und Bekanntmachung des Hinweises auf die Patenterteilung: **07.06.2006**
(21) Anmeldenummer: 00116663.6
(22) Anmeldetag: 02.08.2000
(51) Int. Cl.: F25D 29/00, F25B 49/02, G05D 23/19

(54) **Elektronische Regelvorrichtung für Kühl- und Gefriergeräte**
Electronic control device for cooling or freezing apparatus
Commande électronique pour appareils de refroidissement ou de congélation

(43) Veröffentlichungstag der Anmeldung: 06.02.2002
(73) Patentinhaber: Siebe Appliance Controls GmbH, 78559 Gosheim (DE)
(72) Erfinder: Anders, Klaus, 78559 Gosheim (DE); Sewerin, Peter, 78601 Mahlstetten (DE)
(74) Vertreter: Vetter, Hans

(56) Entgegenhaltungen:
- EP-A- 0 062 313
- EP-A- 0 298 415
- EP-A- 0 690 277
- DE-C- 19 747 256
- FR-A- 2 222 616
- US-A- 3 443 121
- US-A- 4 292 813

## Beschreibung

Die Erfindung betrifft eine elektronische Regelvorrichtung für Kühl- und Gefriergeräte gemäß dem Oberbegriff des Anspruchs 1. So eine Regelvorrichtung ist aus US-A-292 813 bekannt.

Derzeit übliche Ausführungen von Kühl- und Gefriergeräten arbeiten mit elektropneumatischen Reglern zur Vorgabe der Ein- und Ausschaltzeiten des Kühlaggregats bzw. des Kompressors. Bei diesen elektropneumatischen Reglern werden die Ein- und Ausschaltzeiten durch verschiedene Ein- und Ausschalttemperaturen, gemessen auf dem Verdampfer, vorgegeben. Hierdurch werden die thermischen Zeitkonstanten der Kühl- und Erwärmungszeit phasenrealisiert. Die Regler werden empirisch kalibriert, damit der jeweilige Benutzer seine Wunschtemperatur einstellen kann. Es sind auch schon elektronische Regler für Kühl- und Gefriergeräte bekannt, die jedoch nach demselben Prinzip arbeiten. Kühl- und Gefriergeräte mit den bekannten Reglern weisen große Regelschwingungen auf und besitzen einen relativ schlechten Wirkungsgrad.

Aus der US-A-4 292 813 ist eine Regelvorrichtung für Kühlgeräte bekannt, bei der beim Erreichen einer vorgegebenen Soll-temperatur das Kühlaggregat ausgeschaltet wird. Die Wieder-einschaltung erfolgt nach einer vorgebbaren und einstellbaren Zeitspanne. Auch dieses Regelkonzept führt zu relativ großen Regelschwankungen bzw. Regelschwingungen.

Eine aus der EP-A-0 062 313 bekannte Kühleinrichtung besitzt eine Zeitsteuerung zur zeitlichen Steuerung der Kühlvorgänge. Die Art der Regelung der Kühltemperatur ist nicht näher beschrieben.

Auch bei einem aus der DE 197 47 256 C bekannten Temperaturregler für Kühlmöbel ist die Art der Regelung selbst nicht beschrieben. Diese Druckschrift befasst sich vor allem mit einer Schutzeinrichtung, die mit Hilfe von Schutzimpedanzen arbeitet.

Eine Aufgabe der vorliegenden Erfindung besteht darin, eine elektronische Regelvorrichtung für Kühl- und Gefriergeräte zu schaffen, die bei geringerem Verbrauch die eingestellte Soll-temperatur wesentlich exakter einregeln und Regelschwingungen vermeiden kann.

Diese Aufgabe wird erfindungsgemäß durch die Merkmale des Anspruchs 1 gelöst.

In vorteilhafter Weise wird durch die permanent getaktete Betriebsspannung für das Kühlaggregat unter ständiger Überprüfung und Korrektur des Taktverhältnisses die durch den Temperatur-Sollwertgeber vorgegebene Innentemperatur sehr exakt eingehalten, und auch bei Änderungen des Leistungsbedarfs durch Öffnen einer Tür oder durch neu eingebrachtes Kühlgut wird die eingestellte Soll-Temperatur wieder sehr schnell und exakt erreicht, da sich die jeweils erforderliche Leistung durch Korrektur des Taktverhältnisses jeweils schnell einstellt. Durch die Steuermittel werden in vorteilhafter Weise die Ausschaltzeiten der getakteten Betriebsspannung jeweils durch Zeitinkremente verändert, so dass eine Korrektur des Taktverhältnisses in jedem Zyklus auf einfache Weise möglich ist. Die Steuermittel bewirken in günstiger Weise eine inkrementale Verkürzung der Ausschaltzeiten bei gegenüber dem Temperatur-Sollwert höheren Temperatur-Istwert und eine inkrementale Verlängerung der Ausschaltzeiten bei gegenüber dem Temperatur-Sollwert niedrigerem Temperatur-Istwert. Dies hat sich vor allem für den automatischen Abtauvorgang als besonders vorteilhaft erwiesen, da bei hohen Außentemperaturen der Kälteverlust durch die Isolation größer ist und zu kürzeren Ausschaltzeiten bei der Regelung führt. Genauso verhält es sich mit der Abtauzeit, die ebenfalls bei höheren Außentemperaturen kürzer ist. Durch empirische Ermittlung kann das Verhältnis von Ausschaltzeit zur Abtauzeit ermittelt und für die jeweilige Serie eines Kühl- oder Gefriergeräts festgelegt werden. Ein Abtausensor (z.B. Verdampfersensor) kann dadurch entfallen.

Durch die in den Unteransprüchen aufgeführten Maßnahmen sind vorteilhafte Weiterbildungen und Verbesserungen der im Anspruch 1 angegebenen Regelvorrichtung möglich.

Als besonders vorteilhaft hat es sich dabei herausgestellt, wenn die Zeitinkremente bei größer werdender Regelabweichung verlängert werden, insbesondere proportional verlängert werden. Dies bewirkt zum einen eine schnelle Leistungsveränderung bei größeren Regelabweichungen und bewirkt zum anderen, dass im eingeschwungenen Zustand das Taktverhältnis mit kleinen Ausschlägen um den Idealwert herumpendelt.

In einer bevorzugten Ausgestaltung wird dann jeweils zum Abtauen eine Ausschaltzeit um einen dem Verhältnis zwischen Ausschaltzeit zur Abtauzeit entsprechenden festen Faktor verlängert, was jeweils beispielsweise nach einer vorgebbaren Abtauintervallzeit oder nach einer vorgebbaren Zahl von Kühlzyklen erfolgen kann.

Der Sollwertgeber ist zweckmäßigerweise als Zifferneingabe-Vorrichtung oder als Potentiometer ausgebildet, wobei der Temperatursensor vorzugsweise an einer im Innenraum angeordneten Platine der Regelvorrichtung angebracht ist. Auf diese Weise können Kabel, Stecker und separate Montage des Temperatursensors im Kühlgerät eingespart werden. Ein vergossener Temperatursensor ist ebenfalls nicht erforderlich. Im Falle einer externen Zifferneingabe-Vorrichtung kann selbstverständlich auch ein separater Temperatursensor vorgesehen sein.

Ein Mikroprozessor bildet vorzugsweise das Kernstück der Regelvorrichtung und beinhaltet die Reglerfunktionen und die Einstellfunktionen für das Taktverhältnis.

Ein Ausführungsbeispiel der Erfindung ist in der Zeichnung dargestellt und in der nachfolgenden Beschreibung näher erläutert. Es zeigen:
- Fig. 1: ein schematisches Blockschaltbild einer elektronischen Regelvorrichtung für Kühl- und Gefriergeräte als Ausführungsbeispiel der Erfindung und
- Fig. 2: ein Flussdiagramm zur Erläuterung der inkrementalen Korrektur des Taktverhältnisses der getakteten Betriebsspannung für das Kühlaggregat.

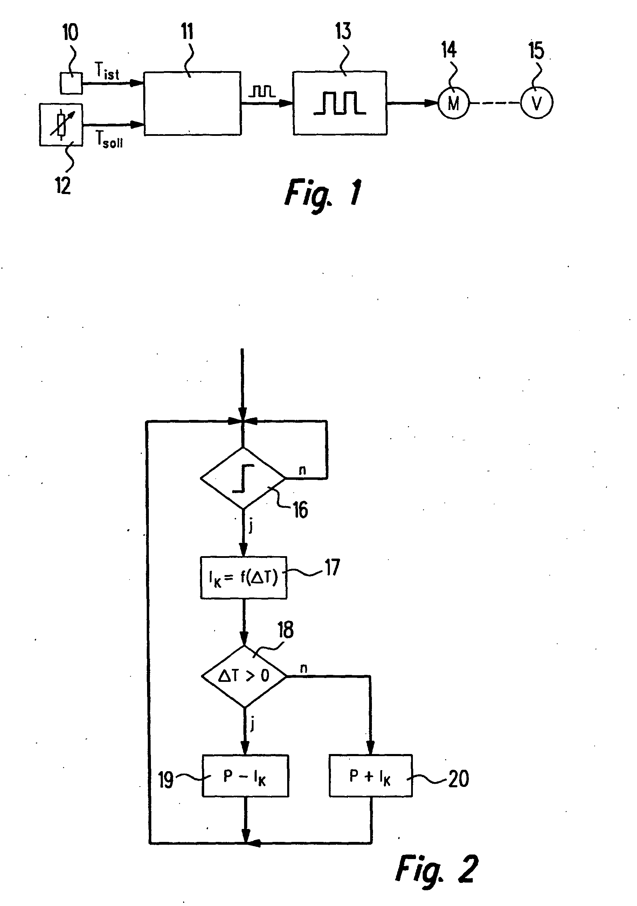

Gemäß dem in Fig. 1 dargestellten Ausführungsbeispiel wird der Temperatur-Istwert Tᵢₛₜ eines im Innenraum eines im übrigen nicht dargestellten Kühl- oder Gefriergeräts angeordneten Temperatursensors 10 einem elektronischen Regler 11 zugeführt, der beispielsweise als Mikrorechner ausgebildet ist bzw. als wesentlichen Bestandteil einen Mikroprozessor enthält. Weiterhin wird diesem Regler 11 ein von einem Einstellelement 12 erzeugter Temperatur-Sollwert Tₛₒₗₗ zugeführt.

Der Regler 11 regelt die Innentemperatur des Kühl- oder Gefriergeräts auf den vorgegebenen Temperaturwert Tₛₒₗₗ, indem eine Steuerspannung mit einem entsprechenden Taktverhältnis ausgangsseitig gebildet wird. Diese Steuerspannung erzeugt in einer Treiberstufe 13 eine getaktete Betriebsspannung mit einem entsprechenden Taktverhältnis. Mit Hilfe dieser getakteten Betriebsspannung wird ein Antriebsmotor 14 für einen Verdichter bzw. Kompressor 15 des Kühlaggregats betrieben.

Sofern sich die elektronische Regelvorrichtung im Innern des Kühl- und Gefriergeräts befindet, so kann der Temperatursensor 10 auf einer Platine dieser Regelvorrichtung angeordnet sein. Dies wird insbesondere dann der Fall sein, wenn das Einstellelement 12 als Potentiometer oder dergleichen ausgebildet ist. Wird zur Vorgabe des Temperatur-Sollwerts Tₛₒₗₗ dagegen ein externes Einstellelement 12 verwendet, wie eine Eingabetastatur oder eine andere digitale Eingabevorrichtung, so kann auch ein separater Temperatursensor 10 im Innenraum des Kühl- oder Gefriergeräts vorgesehen sein, sofern dort keine Platine der Regelvorrichtung vorgesehen ist.

Das Taktverhältnis der getakteten Betriebsspannung wird ständig überprüft und korrigiert und optimiert. In Abhängigkeit der Regelabweichung, also der Differenz ΔT = Tᵢₛₜ - Tₛₒₗₗ, werden bei konstant bleibenden Einschaltzeiten die Ausschaltzeiten inkremental bei positiver Regelabweichung verkürzt und bei negativer Regelabweichung verlängert. Dies wird im folgenden anhand des Flussdiagramms gemäß Fig. 2 beispielhaft erläutert.

Zunächst wird im Schritt 16 ein bestimmter Vorgang in jedem Kühlzyklus abgewartet, im Beispiel die Anstiegsflanke des Einschaltsignals. Dann wird im Schritt 17 ein Zeitinkrement Iₖ in Abhängigkeit der Regelabweichung gebildet, das heißt, dieses Zeitinkrement Tₖ ist um so größer, je größer der Betrag der Regelabweichung ist. Nun wird im Schritt 18 geprüft, ob eine positive oder negative Regelabweichung vorliegt. Bei positiver Regelabweichung wird im Schritt 19 die nächste Ausschaltzeit p um das Zeitinkrement Iₖ verringert, während im umgekehrten Fall im Schritt 20 eine entsprechende Erhöhung stattfindet. Die zyklische inkrementale Anpassung bzw. Korrektur des Taktverhältnisses durch Veränderung der Ausschaltzeit erfolgt somit nicht nur in Abhängigkeit des Vorzeichens der Regelabweichung, sondern auch in Abhängigkeit des Betrags der Regelabweichung. Dies bewirkt, daß die inkrementale Veränderung um den Idealwert, also um den Temperatur-Sollwert Tₛₒₗₗ herum, sehr gering ist und somit nur kleine Regelschwingungen zur Folge hat. Andererseits werden größere Regelabweichungen durch entsprechende Vergrößerung der Korrektur-Zeitinkremente wirksam verhindert, selbst wenn Kälteverluste durch Öffnen der Tür oder neu eingebrachtes Kühlgut entstehen. Durch diese inkrementale Regelung wird die Kühlleistung jeweils sehr schnell an die Bedürfnisse angepasst. Die entsprechenden Steuermittel zur inkrementalen Anpassung des Taktverhältnisses gemäß Fig. 2 sind im elektronischen Regler 11 enthalten, das heißt, im Falle einer Realisierung durch einen Mikrorechner führt dieser die entsprechenden Schritte aus.

Bei der beschriebenen Regelvorrichtung werden zur Anpassung des Taktverhältnisses die Einschaltzeiten konstant gehalten und nur die Ausschaltzeiten verändert. Diese sind daher im normalen Betrieb, also im ausgeregelten Zustand, direkt abhängig von der Außentemperatur. Bei hoher Außentemperatur wird der Kälteverlust durch die Isolation größer sein und daher die sich ergebende Ausschaltzeit kürzer. Entsprechend verhält sich die Abtauzeit zum Abtauen des Kühlaggregats bzw. des Geräts, das heißt, bei kürzerer Ausschaltzeit ist auch nur eine kürzere Abtauzeit erforderlich. Durch empirische Ermittlung kann das Verhältnis zwischen normaler Ausschaltzeit und Abtauzeit ermittelt und für die jeweilige Serienfertigung festgelegt werden. Ein Verdampfersensor zur Erfassung des Abtauzustands ist dabei nicht mehr erforderlich.

Abtauvorgänge können zyklisch durchgeführt werden, z. B. jeweils nach einer bestimmten Anzahl von Kühlzyklen oder nach einer bestimmten Zeit. Die entsprechende Ermittlung der Abtauzeitpunkte kann durch den Mikroprozessor im Regler 11 erfolgen. Zu jedem dieser Zeitpunkte wird dann beispielsweise einmal die Einschaltzeit und die Ausschaltzeit um den empirischen Faktor verlängert, um den Abtauvorgang durchzuführen. Durch den empirischen Faktor wird die erforderliche Abtauzeit dann automatisch an die Außentemperatur angepasst.

Erforderliche Ein- und Ausschaltzeiten liegen im Bereich von Minuten, vorzugsweise 10 bis 15 Minuten, wobei diese Zeiten verbrauchsoptimiert eingestellt werden können.

Prinzipiell ist es selbstverständlich auch möglich, die Ausschaltzeiten konstant zu lassen und die Einschaltzeiten zu variieren oder sowohl die Einschaltzeiten als auch die Ausschaltzeiten zu variieren. In diesen Fällen ist dann keine direkte Zuordnung zur Abtauzeit möglich, und diese muss durch kompliziertere Weise erfaßt werden.

## Patentansprüche

1. Elektronische Regelvorrichtung für Kühl- und Gefriergeräte, mit einem Temperatur-Sollwertgeber (12) und einem die Innentemperatur erfassenden Temperatursensor (10), wobei ein Regler in Abhängigkeit der Regelabweichung auf ein Kühlaggregat zur Regelung der Innentemperatur einwirkt und zur Regelung des Taktverhältnisses einer permanent getakteten Betriebsspannung für das Kühlaggregat (14, 15) in Abhängigkeit der Regelabweichung ausgebildet ist, **dadurch gekennzeichnet, dass** konstante Einschaltzeiten und variable Ausschaltzeiten vorgebende Steuermittel zur ständigen Überprüfung und Korrektur des Taktverhältnisses vorgesehen sind, wobei diese Steuermittel zur inkrementalen Verkürzung der Ausschaltzeiten (19) jeweils durch bei einem bestimmten Vorgang in jedem Kühlzyklus gebildete Zeitinkremente (I_{K}) bei gegenüber dem Temperatur-Sollwert (Tₛₒₗₗ) höheren Temperatur-Istwert (Tᵢₛₜ) und zur inkrementalen Verlängerung der Ausschaltzeiten (20) jeweils durch bei einem bestimmten Vorgang in jedem Kühlzyklus gebildete Zeitinkremente (I_{K}) bei gegenüber dem Temperatur-Sollwert (Tₛₒₗₗ) niedrigerem Temperatur-Istwert (Tᵢₛₜ) ausgebildet sind.

2. Elektronische Regelvorrichtung nach Anspruch 1, **dadurch gekennzeichnet, dass** die Steuermittel zur Verlängerung der Zeitinkremen-te (I_{K}) bei größer werdender Regelabweichung ausgebildet sind, insbesondere zur proportionalen Verlängerung.

3. Elektronische Regelvorrichtung nach Anspruch 1 oder 2, **dadurch gekennzeichnet, dass** Abtaumittel zur Verlängerung einer Ausschaltzeit um einen festlegbaren Faktor jeweils nach einer vorgebbaren Abtauintervallzeit oder nach einer vorgebbaren Zahl von Kühlzyklen vorgesehen sind.

4. Elektronische Regelvorrichtung nach einem der vorhergehenden Ansprüche, **dadurch gekennzeichnet, dass** der Temperatur-Sollwertgeber (12) als Zifferneingabe-Vorrichtung oder Potentiomenter ausgebildet ist.

5. Elektronische Regelvorrichtung nach einem der vorhergehenden Ansprüche, **dadurch gekennzeichnet, dass** der Temperatursensor (10) an einer im Innenraum angeordneten Platine der Regelvorrichtung angebracht ist.

6. Elektronische Regelvorrichtung nach einem der vorhergehenden Ansprüche, **dadurch gekennzeichnet, dass** sie einen Mikroprozessor als wesentliches Funktionselement besitzt.

## Claims

1. Electronic control unit for refrigerators and freezers, with a set temperature transmitter (12) and a temperature sensor (10) for the detection of the interior temperature, wherein a controller acts in dependence on control deviation on a refrigeration unit to control the interior temperature and is designed for controlling the clock ratio of a permanently clocked operating voltage for the refrigeration unit (14, 15) in dependence on control deviation, **characterised in that** control means which predetermine constant on-times and variable off-times are provided for the continuous monitoring and correction of the clock ratio, said control means being designed for incrementally shortening the off-times (19) by time increments (I_{K}) generated at a defined process in each cooling cycle if the actual temperature (Tᵢₛₜ) is higher than the set temperature (Tₛₒₗₗ) and for incrementally lengthening the off-times (20) by time increments (I_{K}) generated at a defined process in each cooling cycle if the actual temperature (Tᵢₛₜ) is lower than the set temperature (Tₛₒₗₗ).

2. Electronic control unit according to claim 1, **characterised in that** the control means are designed for lengthening the time increments (I_{K}) at increasing control deviation, in particular for proportional lengthening.

3. Electronic control device according to claim 1 or 2, **characterised in that** defrosting means are provided for lengthening an off-time by a definable factor after a presettable defrosting interval time or after a presettable number of cooling cycles.

4. Electronic control device according to any of the preceding claims, **characterised in that** the set temperature transmitter (12) is designed as a numerical input device or as a potentiometer.

5. Electronic control device according to any of the preceding claims, **characterised in that** the temperature sensor (10) is mounted on a printed circuit board of the control unit, which is located in the interior.

6. Electronic control device according to any of the preceding claims, **characterised in that** it features a microprocessor as essential functional element.

## Revendications

1. Dispositif de régulation électronique pour des appareils de refroidissement et de congélation, avec un codeur de valeur de consigne de température (12) et un capteur de température (10) relevant la température intérieure, un régulateur agissant sur un groupe frigorifique en fonction de l'écart de régulation afin de réguler la température intérieure et étant conformé pour réguler, en fonction de l'écart de régulation, la cadence d'une tension de service cadencée de façon permanente et destinée au groupe frigorifique (14, 15), **caractérisé en ce que** des moyens de commande imposant des temps de marche constants et des temps d'arrêt variables sont prévus pour surveiller et corriger en permanence la cadence, ces moyens de commande étant conformés pour raccourcir par incréments les temps d'arrêt (19) d'un incrément de temps (I_{K}) formé par une opération déterminée à chaque cycle de refroidissement quand la température réelle (Tᵢₛₜ) est supérieure à la valeur de consigne (Tₛₒₗₗ) de la température et pour allonger par incréments les temps d'arrêt (20) d'un incrément de temps (I_{K}) formé par une opération déterminée à chaque cycle de refroidissement quand la température réelle (Tᵢₛₜ) est inférieure à la valeur de consigne (Tₛₒₗₗ) de la température.

2. Dispositif de régulation électronique selon la revendication 1, **caractérisé en ce que** les moyens de commande sont conformés pour allonger les incréments de temps quand l'écart de régulation augmente, en particulier pour les rallonger de manière proportionnelle.

3. Dispositif de régulation électronique selon la revendication 1 ou 2, **caractérisé en ce que** des moyens de dégel sont prévus pour allonger un temps d'arrêt d'un facteur prédéterminable à chaque fois après un intervalle de temps de dégel prédéterminable ou après un nombre prédéterminable de cycles de refroidissement.

4. Dispositif de régulation électronique selon l'une des revendications précédentes, **caractérisé en ce que** le codeur de valeur de consigne de température (12) est conformé en dispositif de saisie numérique ou en potentiomètre.

5. Dispositif de régulation électronique selon l'une des revendications précédentes, **caractérisé en ce que** le capteur de température (10) est placé sur une platine du dispositif de régulation placée dans l'espace intérieur.

6. Dispositif de régulation électronique selon l'une des revendications précédentes, **caractérisé en ce qu'**il possède un microprocesseur comme principal élément fonctionnel.
